# DEMANDE DE BREVET EUROPEEN

(11) **EP 4 395 054 A2**
(43) Date de publication de la demande: **03.07.2024**
(21) Numéro de dépôt: 23220217.6
(22) Date de dépôt: 26.12.2023
(51) Int. Cl.: H01M 50/574, H01M 50/213

(54) **MODULE ACCUMULATEUR ÉLECTROCHIMIQUE À RÉSEAU DE CONDUITS FLUIDIQUES**

(30) Priorité: 26.12.2022 FR 2214511
(71) Demandeur: Commissariat à l'énergie atomique et aux énergies alternatives, 75015 Paris (FR)
(72) Inventeur: PANARIELLO, Remy, 38054 Grenoble Cedex 9 (FR); BOUVIER, Michaël, 38054 Grenoble cedex 09 (FR); ROUX, Guilhem, 38054 Grenoble cedex 09 (FR); WEICK, Clément, 38054 Grenoble cedex 09 (FR)
(74) Mandataire: INNOV-GROUP

(57) **Abrégé**

Module accumulateur électrochimique comportant un boitier (1) et au moins un accumulateur électrochimique (6) disposé dans un logement (5) du boitier (1), et comprenant :
- une paroi d'appui (3) et une paroi de connexion (4) ;
- au moins un contacteur électrique (7), monté sur la paroi de connexion (4) et comportant une enceinte à volume variable ainsi qu'un contact électrique mobile adapté à être déplacé par l'enceinte à volume variable en direction d'une borne de l'accumulateur électrochimique (6), le contact électrique mobile étant électriquement relié à un circuit électrique par un conducteur de jonction ;
- un réseau de conduits fluidiques disposé au niveau de la paroi de connexion (4) et raccordant l'enceinte à volume variable avec un raccord fluidique (8) monté sur le boitier (1) et saillant du boitier (1), le raccord fluidique (8) étant adapté à être raccordé à un circuit fluidique à l'extérieur du module accumulateur électrochimique.

## Description

### DOMAINE TECHNIQUE

L'invention concerne le domaine des accumulateurs d'énergie électrique et concerne plus précisément le conditionnement et la mise en oeuvre physique, de manière sécurisée, d'accumulateurs électrochimiques en modules pour tout type d'application, et notamment les applications embarquées et en milieu difficile, ainsi que les applications de stockage stationnaire.

Dans ces applications embarquées ou stationnaires, notamment en milieu difficile, par exemple les accumulateurs embarqués dans des véhicules électriques ou agencés dans des équipements industriels, la sécurité de l'agencement et du regroupement des accumulateurs est essentielle pour garantir performances, sûreté de fonctionnement et sécurité des personnes, dans un domaine où la connectique électrique entre les accumulateurs est une problématique majeure.

### ART ANTÉRIEUR

La demande de brevet DE102011005633 décrit un accumulateur électrochimique qui comporte un dispositif de coupure mécanique des connexions électriques. Le dispositif est doté d'un actionneur adapté à déplacer l'une des bornes de l'accumulateur pour interrompre une opération de charge en fonction des indications données par des capteurs.

### EXPOSÉ DE l'INVENTION

l'invention a pour but d'améliorer la sécurité et le contrôle électrique des boitiers de modules accumulateurs électrochimiques de l'art antérieur, et leur mise en oeuvre.

À cet effet, l'invention vise un module accumulateur électrochimique conforme à la revendication 1.

Selon un autre objet, l'invention vise un procédé de connexion d'un module accumulateur électrochimique tel que décrit ci-dessus, comportant une étape de mise en pression d'un fluide dans le réseau de conduits fluidiques.

Selon un autre objet, l'invention vise un procédé de déconnexion d'un module accumulateur électrochimique tel que décrit ci-dessus, comportant une étape de diminution de la pression du réseau de conduits fluidiques.

Le module accumulateur électrochimique selon l'invention offre une structure compacte avec des moyens de connexion et de déconnexion électrique intégrés, qui peuvent être par ailleurs pilotables à distance, pouvant ainsi être assemblés pour former des batteries telles que, par exemple, des batteries lithium-ion.

L'invention offre une plus grande liberté et une plus grande sécurité dans les procédés d'assemblage de batteries, de montage et démontage des accumulateurs (également appelées « cellules ») au sein des modules constituant ces batteries, notamment dans le cadre du démantèlement des batteries en vue de leur recyclage ou d'opérations de maintenance. De plus, en cas de pilotage à distance, une sécurité optimale est assurée durant les phases de démantèlement, car les accumulateurs sont déconnectés les uns des autres avant l'ouverture des modules et de la batterie, ce qui peut limiter les risques d'électrisation mais aussi de court-circuit. Les accumulateurs, qui sont également dénommés « cellules » sont en effet les constituants élémentaires d'une batterie. Ces accumulateurs possèdent un boitier qui leur est propre ainsi que des bornes de connexion.

Le boitier de module accumulateur électrochimique selon l'invention permet d'assurer la connexion et la déconnexion électrique d'une multitude d'accumulateurs, sans soudure et à moindre cout en comparaison des solutions déconnectables existantes.

L'invention permet des connexions électriques avec une meilleure homogénéité des résistances de contact, ce qui procure des connexions électriques de meilleure qualité, avec une plus grande tenue dans le temps. L'utilisation d'un réseau fluidique mutualisé pour la connexion de plusieurs accumulateurs permet de maintenir une pression homogène au niveau des contacts électriques. Même si les tolérances mécaniques et dimensionnelles ont pour conséquence une disparité dans les dimensions des logements d'accumulateurs (ce qui est inévitable), tous les accumulateurs bénéficieront d'une connexion électrique de même résistance (car pression de contact identique), ce qui procure une longévité plus homogène entre les accumulateurs dans les cycles charge/décharge, à la différence de l'art antérieur qui souffre d'un potentiel vieillissement localisé de certains éléments, de manière hétérogène.

Ces connexions présentent par ailleurs une meilleure tenue aux chocs et aux vibrations, ce qui est primordial notamment pour des applications embarquées. Un rôle d'amortissement vis-à-vis des chocs peut être obtenu en réduisant les contraintes associées.

Il est par ailleurs possible de dissocier différents tronçons du réseau de conduits fluidiques, ce qui permet de rendre indépendantes la connexion et la déconnexion de groupes prédéterminés d'accumulateurs au sein du boitier, permettant par exemple des opérations de maintenance telle que l'identification fine de problèmes d'équilibrage de charge, ou la mise en oeuvre de mesure de rééquilibrage en chargeant ou déchargeant une portion seulement des accumulateurs d'un même boitier.

L'invention permet en outre une simplification de conception par rationalisation du nombre de pièces, en mutualisant la fonction de contention des accumulateurs et de connexion électrique, avec un gain potentiel en masse, volume et cout.

Par ailleurs, il est possible d'agencer le module accumulateur électrochimique de telle sorte que si un accumulateur se dégrade (en cas de surchauffe, voire d'explosion), cet accumulateur créera une fuite vers l'extérieur en perforant l'enceinte à volume variable, ce qui entrainera une diminution de pression dans tout le réseau fluidique, ou dans le tronçon concerné. Toutes les enceintes à volume variable du réseau, ou du tronçon concerné, subiront une diminution de volume et entraineront une déconnexion des accumulateurs concernées, sans utilisation de source d'énergie ou d'élément actif pour cette déconnexion. Par ailleurs, le fluide utilisé pour la mise en pression de l'enceinte à volume variable se déversera dans la ou les zones de défauts, ce qui peut amener l'ensemble à un meilleur niveau de sécurité (en prévoyant un fluide présentant un pouvoir de refroidissement ou d'inertage). Un haut niveau de sécurité est ainsi obtenu, grâce à ces moyens de sécurité passive. Dans ce cadre, le système peut être prévu pour que les contacteurs électriques soient normalement ouverts électriquement en l'absence de consigne.

Par ailleurs, si le débit du fluide (en plus de la pression) alimentant le dispositif est monitoré, une hausse subite du débit (et/ou baisse de pression) peut être un indicateur de défaillance d'un ou plusieurs accumulateurs, permettant de déconnecter le dispositif et/ou solliciter une intervention humaine.

Dans ce cadre, l'architecture électrique peut être prévue pour que la sécurité passive entrainant une déconnexion localisée puisse permettre d'assurer une continuité de service, éventuellement dégradée, en plus de l'aspect sécuritaire. Cette fonction de continuité de service en cas de défaillance d'un ou plusieurs accumulateurs, peut également être pilotée par un capteur, de manière préventive.

Le boitier de module accumulateur électrochimique selon l'invention peut comporter les caractéristiques additionnelles, seules ou en combinaison, données dans les revendications dépendantes.

### PRÉSENTATION DES FIGURES

D'autres caractéristiques et avantages de l'invention ressortiront de la description non limitative qui suit, en référence aux dessins annexés dans lesquels :
- la figure 1 illustre un module d'accumulateur électrochimique selon l'invention ;
- la figure 2 illustre le boitier du module d'accumulateur électrochimique de la figure 1 ;
- la figure 3 illustre le boitier de la figure 2, avec son réseau de conduits fluidiques visible ;
- la figure 4A et la figure 4B sont des vues schématiques d'un module accumulateur électrochimique selon l'invention, avec son contacteur électrique en position activée, pour deux modes de réalisation différents ;
- la figure 5A et la figure 5B sont des vues similaires respectivement aux figures 4A et 4B, avec le contacteur électrique en position désactivée ;
- la figure 5C est une variante de la figure 5A ;
- la figure 6 est une vue similaire à la figure 4A, pour un module accumulateur électrochimique selon un autre mode de réalisation de l'invention ;
- la figure 7 est une vue en perspective d'un module accumulateur électrochimique selon un autre mode de réalisation de l'invention ;
- la figure 8 est une vue éclatée partielle de module accumulateur électrochimique de la figure 7 ;
- la figure 9 est une vue de dessous de la paroi de connexion du boitier du module accumulateur électrochimique de la figure 8 ;
- la figure 10 est une vue de détail de la coopération des contacteurs électriques avec les accumulateurs du module accumulateur électrochimique de la figure 7 ;
- la figure 11 est une vue éclatée d'un module accumulateur électrochimique selon un autre mode de réalisation de l'invention ;
- la figure 12 est une vue en perspective de la paroi de connexion du boitier du module accumulateur électrochimique de la figure 11 ;
- la figure 13 est une vue de dessus du support d'actionneurs de la paroi de connexion de la figure 12 ;
- la figure 14 est une vue de dessous du support d'actionneur de la figure 13, les contacteurs électriques étant en position désactivée ;
- la figure 15 est une vue de dessous du support d'actionneur de la figure 13, les contacteurs électriques étant en position activée ;
- la figure 16, la figure 17, la figure 18, et la figure 19 illustrent le procédé de connexion ou de déconnexion selon l'invention.

Les éléments similaires et communs aux divers modes de réalisation portent les mêmes numéros de renvoi aux figures.

### DESCRIPTION DÉTAILLÉE

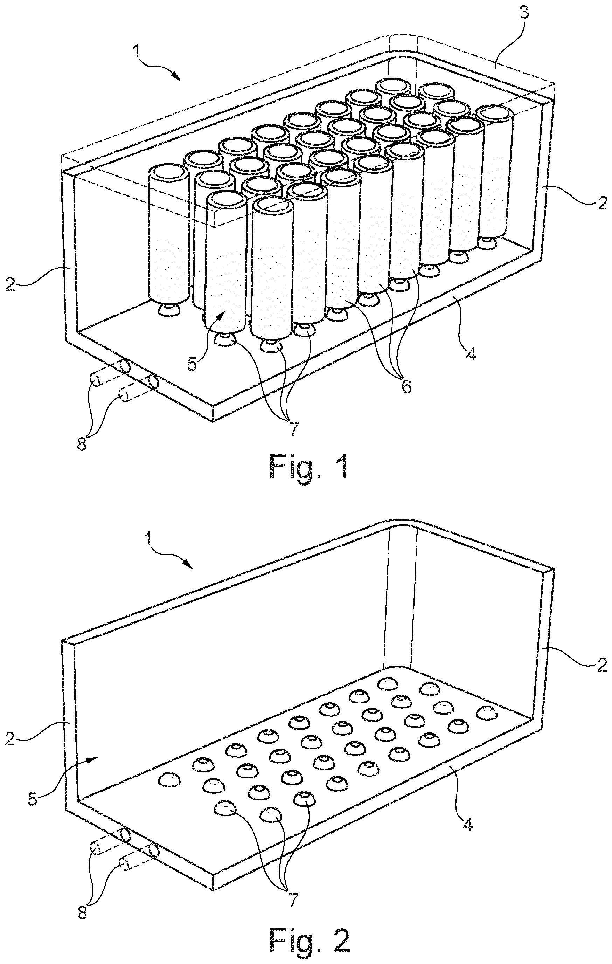

La figure 1 illustre un module accumulateur électrochimique selon l'invention, comportant un boitier 1.

Le boitier 1 est destiné à maintenir et à connecter des accumulateurs pour former un module accumulateur électrochimique. Ces modules sont généralement associés pour constituer un pack batterie, par exemple pour un véhicule électrique ou toute autre application exigeante du point de vue des conditions de fonctionnement et de la sécurité.

Le boitier 1 comporte des parois latérales 2, une paroi supérieure ici dénommée « paroi d'appui 3 », et une paroi inférieure ici dénommée « paroi de connexion 4 ». Sur la vue en perspective de la figure 1, la paroi d'appui 3 et les parois latérales 2 du premier plan sont représentées en transparence pour rendre visible l'intérieur du boitier 1.

Le boitier 1 comporte des logements 5 qui s'étendent entre la paroi d'appui 3 et la paroi de connexion 4, et des accumulateurs 6 prennent place dans ces logements 5. Ces logements 5 assurent le maintien mécanique des accumulateurs 6. Les logements 5 (non représentés) peut être constitués de tout élément de maintien latéral et longitudinal des accumulateurs 6. Autant d'accumulateurs 6 que nécessaire peuvent être ainsi agrégés au sein du boitier 1, selon une architecture en série et/ou en parallèle pour atteindre la tension et la capacité souhaitées. Chaque logement 5 est adapté à recevoir un accumulateur 6. Chaque accumulateur 6 est un accumulateur électrique élémentaire, généralement dénommé « cellule », qui muni de son propre boitier, et de ses bornes de connexion.

Du côté de la paroi de connexion 4, le boitier 1 comporte des contacteurs électriques 7 qui permettent, pour chaque logement 5, de connecter et déconnecter l'accumulateur 6 correspondant. Dans tout le présent texte, par convention :
- la paroi de connexion 4 est ainsi nommée, car elle génère la connexion électrique, et porte le ou les contacteurs électriques 7 ;
- la paroi d'appui 3 est la paroi située à l'opposé du contacteur électrique 7. Cette paroi peut également avoir une fonction de connexion électrique (lorsque l'accumulateur dispose d'une borne du côté de cette paroi) avec un contact électrique fixe 9.

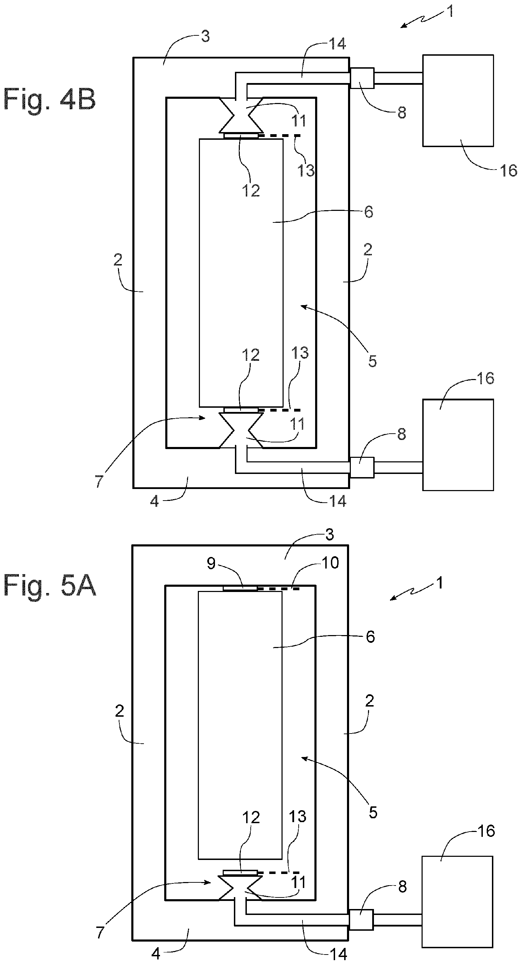

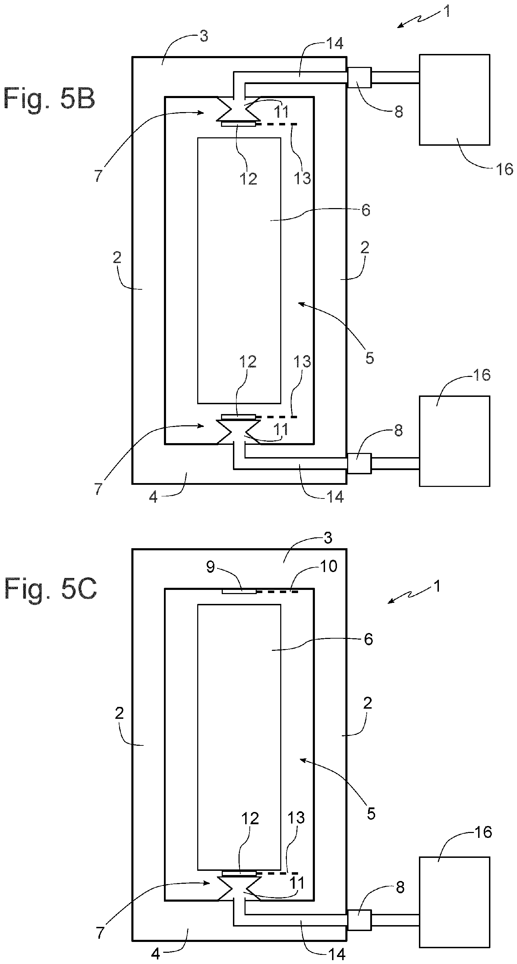

De plus, la paroi d'appui 3 peut optionnellement être une paroi de connexion supplémentaire, en portant également des contacteurs électriques 7 (voir mode de réalisation des figures 4B, 5B).

Dans l'exemple illustré, les accumulateurs 6 sont des accumulateurs électrochimiques cylindriques, étant entendu que les accumulateurs 6 peuvent être de tout autre type connu, notamment prismatique, tant que ces accumulateurs présentent au moins une borne de connexion externe adaptée à coopérer avec les contacteurs électriques 7 disposés au niveau de la paroi de connexion 4.

Les accumulateurs 6 cylindriques de cet exemple comportent une électrode à chacune de leurs extrémités, l'une de ces électrodes étant électriquement connectée du côté de la paroi d'appui 3, et l'autre électrode pouvant être connectée par le biais de l'invention du côté de la paroi de connexion 4.

La figure 2 est similaire à la figure 1, sans les accumulateurs 6 et rend visible l'agencement des contacteurs électriques 7 sur la paroi de connexion 4.

Le boitier 1 comporte de plus des raccords fluidiques 8, qui sont dans cet exemple au nombre de deux. Ces raccords fluidiques 8 sont reliés aux contacteurs électriques 7 par un réseau de conduits fluidiques 14.

Les raccords fluidiques 8 sont montés sur le boitier 1, en étant saillants du boitier 1. Les raccords fluidiques 8 sont adaptés à être raccordés à un circuit fluidique à l'extérieur du module accumulateur électrochimique, de manière à pouvoir piloter la connexion des contacteurs électriques 7 depuis l'extérieur du boitier 1.

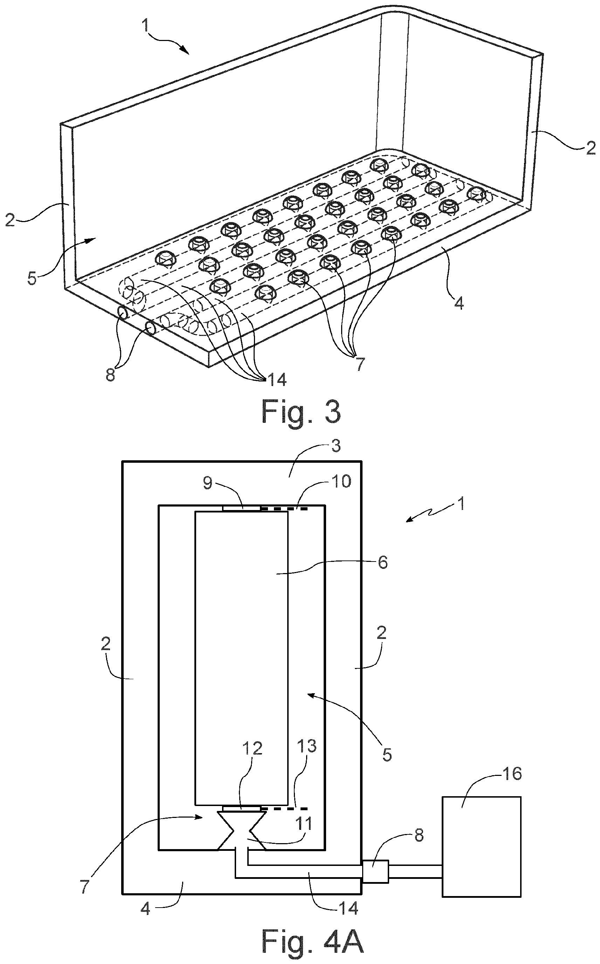

La figure 3 est une vue identique à la figure 2 mais montrant la paroi de connexion 4 en transparence pour rendre visible le cheminement du réseau de conduits fluidiques 14.

Dans cet exemple, le réseau comporte donc plusieurs conduits fluidiques 14, correspondant aux différents contacteurs électriques 7, s'étendant dans l'épaisseur de la paroi de connexion 4 selon deux tronçons indépendants correspondant chacun à l'un des deux raccords fluidiques 8. Chaque tronçon du réseau de conduits fluidiques 14 forme un volume non cloisonné, regroupant plusieurs conduits fluidiques 14 et agissant sur un groupe de contacteurs électriques 7.

Dans chacun de ces tronçons, tous les contacteurs électriques 7 sont fluidiquement connectés entre eux et sont connectés au raccord fluidique 8 correspondant. Ces deux tronçons peuvent être gérés indépendamment, c'est-à-dire que les contacteurs électriques 7 d'un tronçon peuvent être activés et désactivés indépendamment des contacteurs électriques 7 de l'autre tronçon.

Les conduits fluidiques 14 sont des conduits étanches dont le diamètre est, dans cet exemple de l'ordre de 1 à 5 mm.

L'activation ou la désactivation de tous les contacteurs électriques 7 se fait simultanément pour un tronçon donné, par l'intermédiaire du raccord fluidique 8.

Le réseau de conduits fluidiques 14 peut comporter autant de tronçons que nécessaire en fonction de l'architecture souhaitée et des possibilités souhaitées de découplage pour les accumulateurs 6, notamment à des fins de maintenance, de test, d'équilibrage de charges, de déconnexion de sécurité ou de continuité de service, etc. Ceci est particulièrement avantageux pour les accumulateurs de chimie lithium, et pour les systèmes de gestion de batterie BMS (« Battery Management System », en anglais) avancés, qui sont à même de tirer parti de tels regroupements indépendants des accumulateurs 6 d'un même boitier 1.

Les figures 4A, 4B et 5A, 5B sont des vues schématiques en coupe d'un module accumulateur électrochimique comportant un boitier 1 avec, dans cet exemple simplifié, un seul accumulateur 6.

Les figures 4A et 5A correspondent à un mode de réalisation où seule la paroi de connexion 4 est munie de contacteurs électriques 7, comme dans le mode de réalisation des figures 1 à 3, la paroi d'appui 3 ne portant que des contacts électriques fixes 9. En variante, dans le cas où les accumulateurs 6 ne comportent pas d'électrodes du côté de la paroi d'appui 3, ces parois ne comportent aucun contact électrique. Les figures 4B et 5B correspondent à un mode de réalisation où la paroi d'appui 3 joue également un rôle de connexion, en portant également des contacteurs électriques 7, chaque accumulateur étant ainsi connecté par deux contacteurs électriques 7.

En référence au mode de réalisation des figures 4A et 5A, la paroi d'appui 3 comporte un contact électrique fixe 9 contre lequel l'accumulateur 6 est sollicitée, de sorte à connecter électriquement cette électrode de l'accumulateur 6 avec le reste du circuit, c'est-à-dire avec les autres accumulateurs 6 (lorsque le boitier comporte plusieurs accumulateurs), et avec un bornier externe du boitier 1 pour la connexion de l'accumulateur à la charge à alimenter électriquement, et au circuit de recharge. Cette connexion du contact électrique fixe 9 au reste du circuit est réalisée par un conducteur de jonction 10, schématisée par un trait en pointillés sur les figures 4A à 6.

Le contacteur électrique 7 qui est disposé sur la paroi de connexion 4 comporte une enceinte à volume variable 11 qui est solidaire d'un contact électrique mobile 12.

Dans cet exemple, le contact électrique mobile 12 est fixé sur la partie supérieure de l'enceinte 11 à volume variable (le terme supérieur est ici employé compte tenu de l'orientation des figures 3 et 4, qui peut bien entendu varier), c'est-à-dire du côté de l'emplacement 5 de l'accumulateur 6. La figure 4A illustre l'enceinte à volume variable 11 dans une configuration de volume maximal et la figure 5A illustre l'enceinte à volume variable 11 dans une configuration de volume minimal.

La variation du volume de l'enceinte 11 permet au contact électrique mobile 12 d'être mobile en direction de la paroi d'appui 3. L'accumulateur 6 qui est disposé dans le logement 5 peut être pressé entre le contact électrique fixe 9 et le contact électrique mobile 12 qui est entrainé par l'enceinte 11 à volume variable. Le contact électrique mobile 12 est ainsi adapté à être déplacé par l'enceinte 11 à volume variable en direction de la paroi d'appui 3, et donc de l'accumulateur 6 lorsqu'il est en place dans son logement 5.

De même que pour le contact électrique fixe 9, le contact électrique mobile 12 est électriquement relié au reste du circuit électrique par un conducteur de jonction 13 qui est schématisé sur les figures 4A à 6 par un trait en pointillés.

Dans l'exemple simplifié des figures 4A, 5A, et 5C, le réseau de conduits fluidiques 14 ne comporte qu'un seul conduit fluidique 14 correspondant au contacteur électrique 7 unique.

Le réseau de conduits fluidiques 14 raccorde l'enceinte 11 à volume variable du contacteur électrique 7 avec un raccord fluidique 8 saillant du boitier 1.

Le contacteur électrique 7 est dit activé lorsque l'intérieur de l'enceinte 11 à volume variable est mis à une pression supérieure à la pression régnant à l'extérieur de cette enceinte ; et le contacteur électrique 7 est dit désactivé lorsque l'intérieur de l'enceinte 11 à volume variable est mis à une pression inférieure à la pression régnant à l'extérieur de cette enceinte.

Dans cet exemple, le réseau de conduits fluidiques 14 est directement pratiqué dans l'épaisseur de la paroi de connexion 4. Un conduit fluidique 14 débouche ainsi par l'une de ses extrémités à l'intérieur de l'enceinte 11 à volume variable et est raccordé par l'autre de ses extrémités au raccord fluidique 8 qui est ici également monté sur la paroi de connexion 4.

Le boitier 1 comporte de plus un moyen de mise en pression 16 ayant ici deux fonctions :
- commander la connexion et la déconnexion électrique de l'accumulateur 6 au sein du boitier 1 en activant et désactivant le contacteur électrique 7 par le pilotage du volume de l'enceinte 11 ;
- maintenir une pression de contact entre le contact électrique mobile 12 et la borne correspondante de l'accumulateur 6, cette pression de contact se répercutant entre le contact électrique fixe 9 et l'accumulateur 6, cette pression de contact étant prédéterminée et permanente, tant que le contacteur électrique 7 est activé.

En variante, la pression de contact peut être modulée dynamiquement pour réagir au mieux à des sollicitations extérieures telles que chocs et vibrations.

Sur la figure 4A, le contacteur électrique 7 est représenté en position activée, c'est-à-dire que le moyen de mise en pression 16 maintient une pression qui se traduit en pression de contact dans les deux connexions électriques de l'accumulateur 6 qui est inséré dans le logement 5, entre le contact électrique fixe 9 et le contact électrique mobile 12. Sur la figure 5A, le contacteur électrique 7 est représenté en position désactivée, c'est-à-dire dans une configuration où le moyen de mise en pression 16 maintient une pression dans l'enceinte 11 à volume variable qui est inférieure ou égale à la pression à l'extérieur de cette enceinte, de sorte que cette dernière adopte une position de repos qui maintient le contact électrique mobile 12 à une distance de la paroi d'appui 3 qui est suffisante pour que l'accumulateur 6 n'ait plus ses deux électrodes connectées. Sur la figure 5A, l'accumulateur 6 est maintenu fixe dans son logement 5, et seule l'une des électrodes de l'accumulateur 6 touche l'un des contacts électriques, et l'accumulateur 6 est donc ainsi électriquement déconnecté du reste du circuit.

La figure 5C illustre une variante de la figure 5A, où l'accumulateur 6 est libre de coulisser dans le logement 5, et sa déconnexion a alors lieu par un mouvement vertical de l'accumulateur 6 lié à la gravité.

Dans cet exemple, le déplacement du contact électrique mobile 12, entre ses deux positions, est de l'ordre de 2 à 10 mm.

Le moyen de mise en pression 16 est réalisé par tout moyen permettant la mise en pression et le maintien d'une pression dans l'enceinte 11 à volume variable. Le moyen de mise en pression 16 peut être par exemple un compresseur pneumatique comprimant de l'air ou un gaz inerte dans le réseau de conduits fluidiques 14. Le passage, pour le contacteur électrique 7, de la position désactivée des figures 5A, 5B à la position activée des figures 4A, 4B est alors réalisé en comprimant un gaz et en maintenant sa pression dans le réseau de conduits fluidiques 14.

Le moyen de mise en pression 16 peut être également, en variante, un dispositif adapté à mettre en pression un fluide non compressible. Le réseau de conduits fluidiques 14 serait alors plein d'un fluide hydraulique tel que de l'huile ou de l'eau, et qui remplirait également l'enceinte 11 à volume variable. La mise en pression et le maintien d'une pression dans l'enceinte 11 à volume variable seraient alors assurés par le moyen de mise en pression 16, éventuellement grâce à un tampon pneumatique ou tout autre dispositif élastique.

L'enceinte 11 à volume variable peut être formée par une enveloppe élastiquement déformable. Dans le présent exemple, l'enceinte 11 à volume variable est réalisée dans le même matériau que la paroi de connexion 4, en continuité de matière avec cette paroi. Le matériau constituant la paroi de connexion 4 est alors choisi, par exemple parmi les polymères, comme un matériau dont la rigidité est suffisante pour que le boitier 1 présente les caractéristiques mécaniques requises pour la contention des éléments qu'il contient (en prévoyant une épaisseur suffisante de ce matériau pour ses parois 2, 3, 4), et en prévoyant une épaisseur d'enceinte 11 suffisamment faible pour que l'enveloppe formant cette enceinte 11 soit flexible et, par cette déformation élastique, permette le déplacement du contact électrique mobile 12 (mouvement de translation). La paroi de connexion 4 peut avoir une épaisseur de l'ordre d'un à trois centimètres, et l'enveloppe constituant l'enceinte 11 à volume variable peut avoir une épaisseur de l'ordre de 0,5 mm.

Dans le présent exemple, l'enceinte 11 à volume variable est réalisée par une enveloppe élastiquement déformable de forme cylindrique, et comporte au moins une zone de section réduite, de sorte que l'enceinte 11 agit comme un soufflet. En variante, toute association de forme et/ou de matériau permettant la réalisation d'une enceinte 11 à volume variable peut être envisagée.

Les figures 4B et 5B illustrent un mode de réalisation comportant un contacteur électrique 7 sur la paroi de connexion 4, de la même manière que le mode de réalisation des figures 4A et 5B, et comportant en outre un deuxième contacteur électrique 7 sur la paroi d'appui 3. La paroi d'appui 3 joue donc ici le même rôle que la paroi de connexion 4. L'accumulateur 6 est connecté et déconnecté par deux contacteurs électriques 7 similaires, à ses deux extrémités opposées.

Dans ce mode de réalisation, l'accumulateur 6 est de préférence maintenu fixe dans son logement 5.

Sur la figure 4B, les deux contacteurs électriques 7 sont représentés en position activée, c'est-à-dire que le moyen de mise en pression 16 maintient une pression dans les deux enceintes 11 à volume variable, qui se traduit en pression de contact dans les deux connexions électriques de l'accumulateur 6, entre les deux contacts électriques mobiles 12. Sur la figure 5B, les contacteurs électriques 7 sont représentés en position désactivée, c'est-à-dire dans une configuration où le moyen de mise en pression 16 maintient une pression dans les deux enceintes 11 à volume variable qui est inférieure ou égale à la pression à l'extérieur de ces enceintes, de sorte que ces dernières adoptent une position de repos qui maintient les contacts électriques mobiles 12 à une distance de la paroi opposée qui est suffisante pour que l'accumulateur 6 n'ait plus ses électrodes connectées. Sur la figure 5B, l'accumulateur 6 est maintenu fixe dans son logement 5, tandis que les deux contacts mobiles 12 sont écartés de l'accumulateur 6 qui est donc ainsi électriquement déconnectée du reste du circuit.

Chaque réseau de conduits fluidiques 14, relatifs chacun à l'un des connecteurs électriques 7, sont ici illustrés comme étant indépendants, chacun avec son propre moyen de mise en pression 16. En variante ces réseaux peuvent être fluidiquement connectés, avec un seul moyen de mise en pression 16 qui pilote alors simultanément la connexion et la déconnexion des deux bornes de l'accumulateur 6.

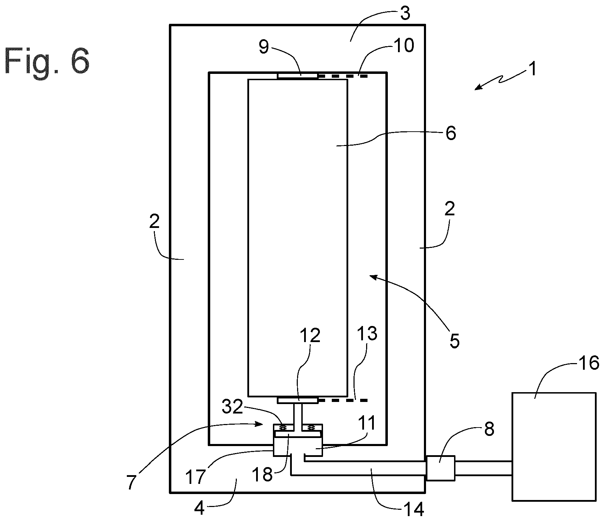

La figure 6 illustre un mode de réalisation dans lequel l'enceinte 11 à volume variable est réalisée par un vérin 17. Le vérin 17 est monté sur la paroi de connexion 4, et l'une des chambres du vérin 17 forme l'enceinte 11. Le contact électrique mobile 12 est couplé au piston 18 du vérin 17 (dans cet exemple, le contact électrique mobile est solidaire de la tige du piston 18).

Le contacteur électrique 7 comporte de plus un moyen élastique sollicitant l'enceinte à volume variable vers une position de repos dans laquelle le contact électrique mobile 12 est maintenu à l'écart de la paroi d'appui 3 d'une distance supérieure à une distance prédéterminée. Cette distance prédéterminée est choisie, lors du dimensionnement du boitier 1 pour une application particulière, pour que lorsque le contact électrique mobile 12 est dans cette position de repos, il soit éloigné de la paroi d'appui 3 d'une distance supérieure à la dimension correspondante de l'accumulateur 6 (sa hauteur, dans l'exemple illustré), de sorte à garantir la déconnexion de cet accumulateur 6, et à supprimer le risque d'arc électrique.

Dans l'exemple des figures 4A à 5B, le moyen élastique est réalisé par l'enveloppe formant l'enceinte 11 elle-même, qui présente des propriétés élastiques par le choix de son matériau et son épaisseur.

Dans l'exemple de la figure 6, le moyen élastique est constitué de ressorts 32.

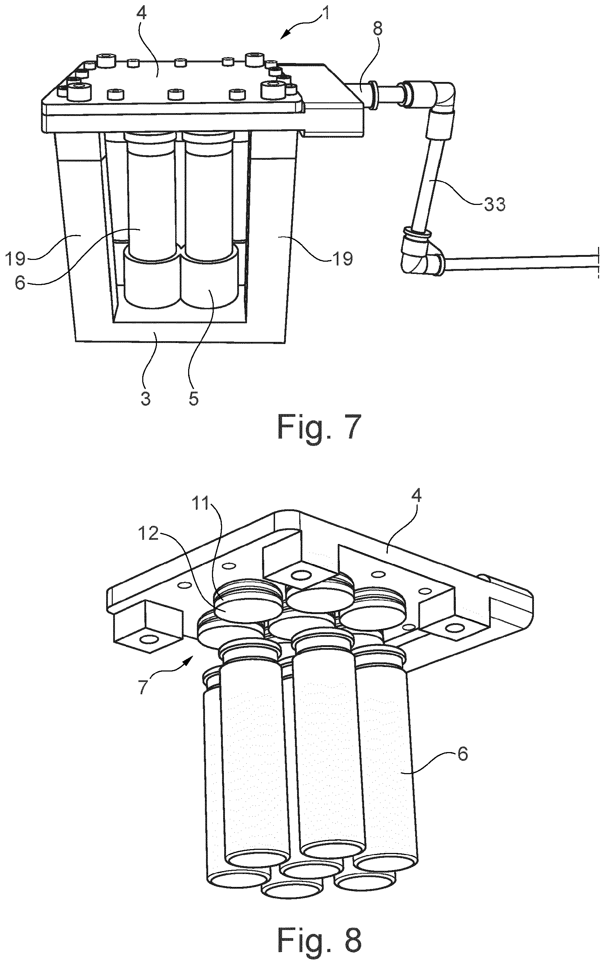

Les figures 7 à 10 illustrent un autre exemple de réalisation d'un module accumulateur électrochimique à sept accumulateurs 6 cylindriques et sept contacteurs électrique 7 qui sont du même type que celui des figures 4A et 5A. Sur les figures 7 à 10, la paroi supérieure du boitier 1 est la paroi de connexion 4, et la paroi inférieure est la paroi d'appui 3.

La paroi d'appui 3 porte les logements 5 qui sont, dans cet exemple, des empreintes cylindriques dans lesquelles viennent se loger les accumulateurs 6.

La paroi de connexion 4 porte trois raccords fluidiques 8 saillant latéralement depuis sa tranche, correspondant dans cet exemple à trois tronçons du réseau de conduits fluidiques 14, relatifs à trois groupes de contacteurs électriques 7. Les accumulateurs 6 sont ainsi regroupées selon trois groupes qui peuvent être connectés et déconnectés indépendamment. La figure 7 illustre l'une des tubulures pneumatiques 33 destinées à raccorder chaque raccord fluidique 8 à son moyen de mise en pression.

Dans cet exemple, les faces latérales du boitier 1 sont ouvertes et ne comportent que des colonnes 19.

La figure 8 est une vue éclatée partielle du module d'accumulateur électrochimique de la figure 7, représentant seulement la paroi de connexion 4 en vis-à-vis d'une partie des accumulateurs 6. Chaque contacteur électrique 7 comporte une enceinte à volume variable 11 portant son contact électrique mobile 12 adapté à venir contre la borne supérieure de l'accumulateur 6 pour sa connexion, ou venir à l'écart de cette borne, pour sa déconnexion.

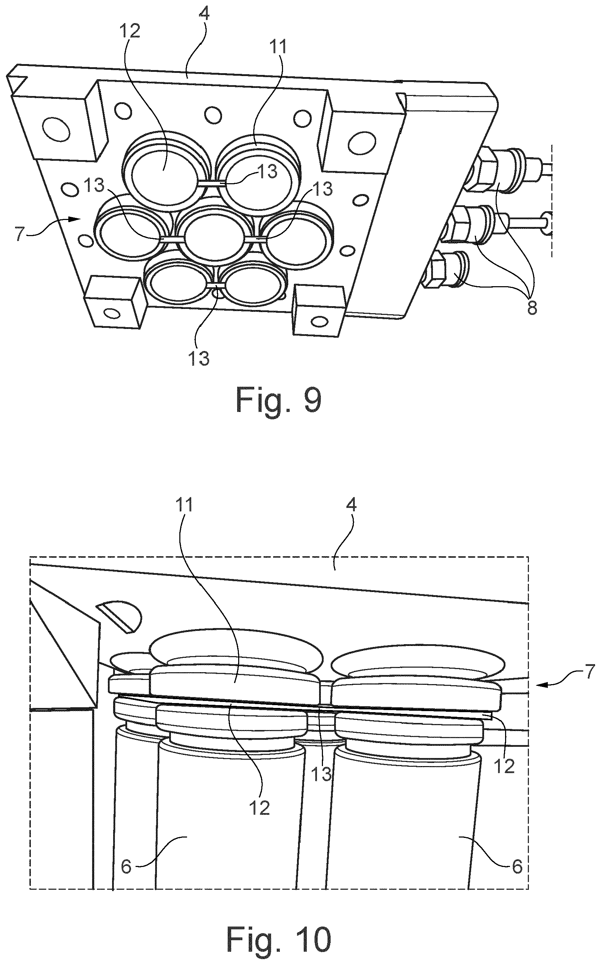

La figure 9 représente la paroi de connexion 4 du boitier des figures 7 et 8. Les contacts électriques mobiles 12 sont reliés entre eux par les conducteurs de jonction 13 selon l'architecture électrique choisie.

Dans cet exemple, chaque enceinte 11 à volume variable présente une face plane qui porte le contact électrique mobile 12, réalisé par un disque de matériau conducteur, par exemple un disque métallique de bonne conductivité électrique.

Les contacts électriques mobiles 12 peuvent être également réalisés sous forme de revêtement de surface conducteur directement appliqué sur l'enceinte 11 à volume variable, par exemple par les procédés de galvanoplastie permettant un dépôt de type métallisation directement sur l'enveloppe formant l'enceinte 11 à volume variable.

Les conducteurs de jonction 13 peuvent être des liens conducteurs souples rapportés sur les contacts électriques mobiles 12, grâce aux techniques de type « bonding », en anglais, avec des conducteurs à section cylindrique ou parallélépipédique, avec suffisamment de longueur et de souplesse pour permettre le déplacement relatif des contacts électriques mobiles 12.

Les contacts électriques mobiles 12 ainsi que les conducteurs de jonction 13 les reliant peuvent également être réalisés conjointement par des lames métalliques rapportées sur plusieurs enceintes 11 à volume variable adjacentes, avec une lame métallique présentant suffisamment de souplesse. La figure 10 est une vue de détail de la paroi de connexion 4 avec des contacteurs électriques 7 activés, et illustre cette variante avec lames métalliques.

La vue de détail de la figure 10 illustre également la forme de type soufflet, avec au moins une zone de plus faible section, de l'enceinte 11 à volume variable. Cette forme permet à l'enceinte 11 à volume variable :
- de présenter une position de repos, en l'absence de sollicitation, qui correspond à un contacteur électrique 7 désactivé ;
- de pouvoir se déformer longitudinalement sous l'effet d'une augmentation de la pression à l'intérieur, permettant de rendre mobile le contact électrique mobile 12 en direction de la paroi d'appui 3 (et donc en direction de l'accumulateur 6 lorsqu'il est mis en place), selon une course suffisante pour assurer la connexion électrique.

Dans le présent exemple, la paroi de connexion 4, le réseau de conduits fluidiques 14, et l'enceinte 11 à volume variable, sont avantageusement réalisés d'une seule pièce, par exemple par fabrication additive, ce qui permet d'obtenir une paroi de connexion 4 rigide (en prévoyant une épaisseur suffisante de matière), un réseau de conduits fluidiques 14 réalisé sous forme d'évidements au sein de la matière dans l'épaisseur de la paroi de connexion 4, et l'enceinte 11 à volume variable (en prévoyant une enveloppe d'épaisseur suffisamment faible et en choisissant une matière suffisamment flexible à cette épaisseur).

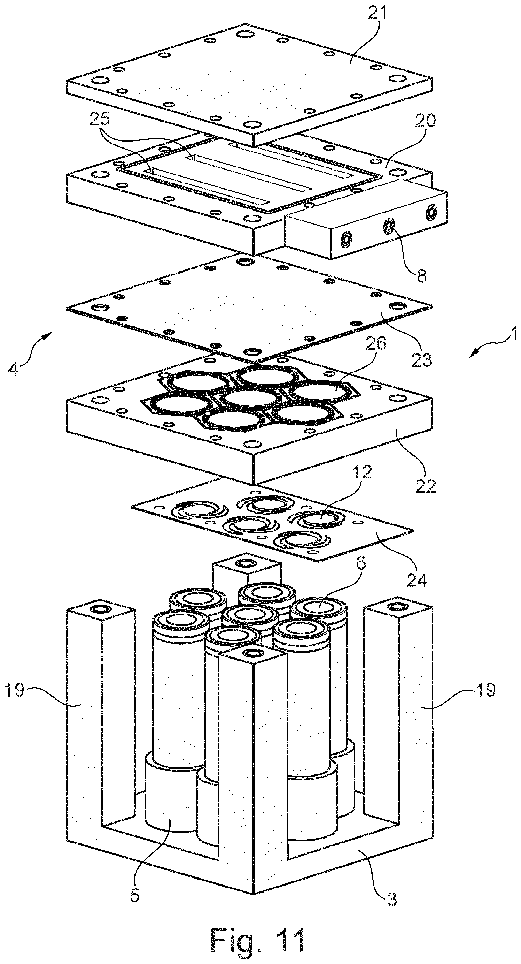

Les figures 11 à 15 illustrent un autre mode de réalisation de l'enceinte 11 à volume variable.

La figure 11 est une vue éclatée d'un module accumulateur électrochimique selon ce mode de réalisation. Ce module est similaire en tout point module de la figure 8, si ce n'est la constitution de la paroi de connexion 4 qui est ici formée des éléments empilés suivants :
- un corps 20 refermé par un couvercle 21 ;
- un support d'actionneur 22 ;
- une membrane souple 23 serrée entre le corps 20 et le support d'actionneur 22 ;
- un clinquant 24 (dont seule une moitié est représentée pour des raisons de clarté de la figure).

Le corps 20 est une pièce rigide de matériau plein de forme parallélépipédique, qui porte les raccords fluidiques 8 ainsi que le réseau de conduits fluidiques 14 dans son épaisseur. Dans cet exemple, trois conduits fluidiques 14 sont formés dans l'épaisseur du corps 20, reliant les raccords fluidiques 8 à des rainures formant des chambres internes 25 qui débouchent de part et d'autre de l'épaisseur du corps 20. Le corps 20 est ici adapté à une fabrication aisée et peu coûteuse par usinage.

Le couvercle 21 referme de manière étanche la face supérieure du corps 20.

La membrane souple 23 ferme quant à elle la face inférieure du corps 20 de sorte que, lorsque la pression dans les conduits fluidiques 14 augmente, la membrane souple 23 se déforme en direction des accumulateurs 6.

L'enceinte 11 à volume variable est donc ici constituée par les chambres internes 25 et leur cloisonnement assuré par le couvercle 21 et par la membrane souple 23.

Le support d'actionneur 22 est fait d'une pièce de matériau rigide comportant des entretoises mobiles 26. Les entretoises mobiles 26 sont adaptées à se déplacer transversalement dans des alésages du support d'actionneur 22. Les entretoises mobiles 26 peuvent être par exemple constituées de cylindres de matériau plein, du même matériau que le support d'actionneur 22, avec des ressorts en spirale les reliant au support d'actionneur 22.

Le clinquant 24 est une feuille de matériau électriquement conducteur, par exemple une feuille métallique, et comporte dans cet exemple des évidements en spirale définissant les contacts électriques mobiles 12 ainsi que les conducteurs de jonction 13.

Dans cet exemple, le clinquant 24 assure une continuité électrique entre tous les contacts électriques mobiles 12.

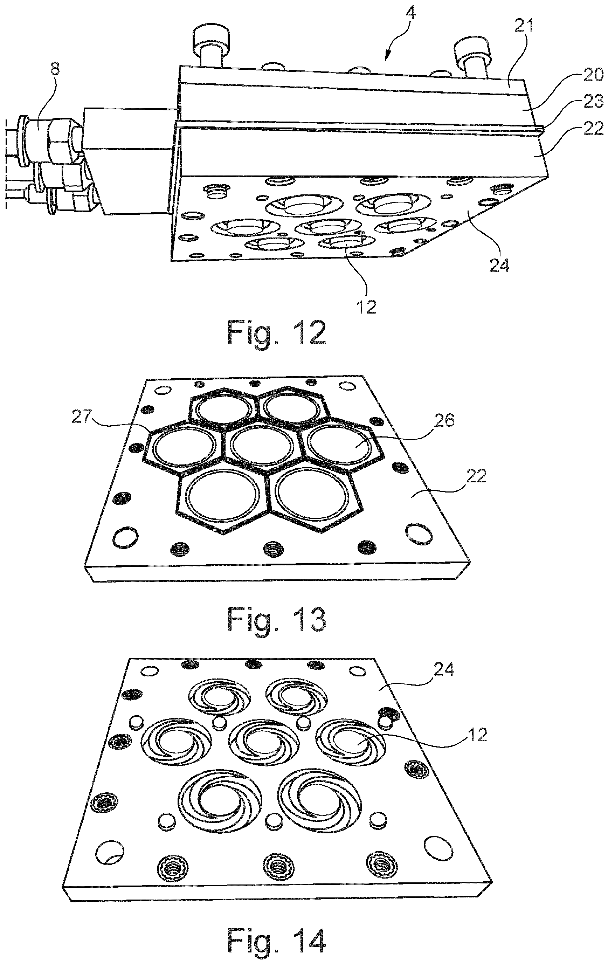

La figure 12 est une vue latérale en perspective illustrant l'assemblage formant la paroi de connexion 4, avec la membrane souple 23 serrée par des vis entre le corps 20 et le support d'actionneur 22, ainsi que les raccords fluidiques 8 saillants latéralement.

La figure 13 est une vue du dessus du support d'actionneur 22 montrant l'agencement des entretoises mobiles 26 ainsi que des cloisons 27 permettant de pincer la membrane souple 23.

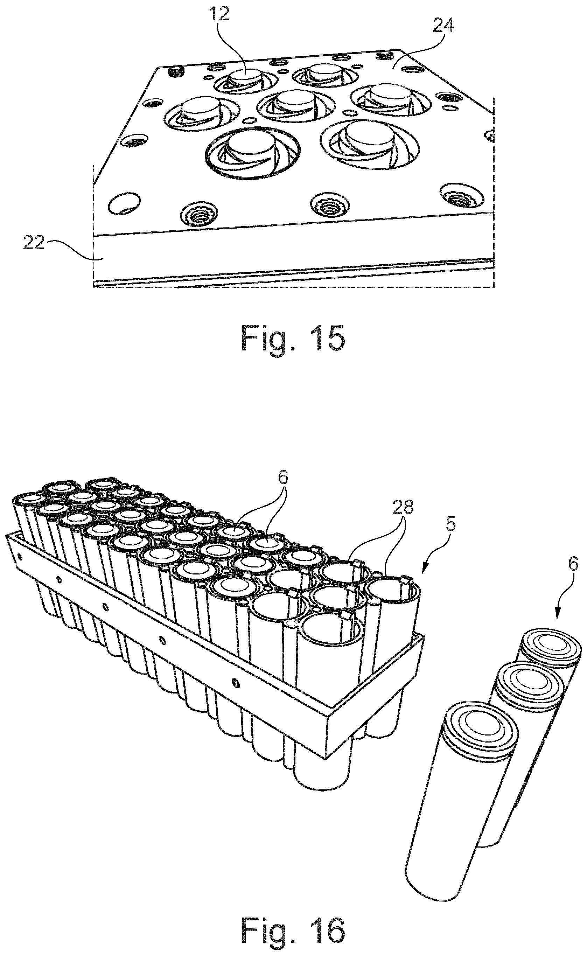

Les figures 14 et 15 sont des vues de dessous du support d'actionneur 22, montrant la liaison élastique entre les entretoises mobiles 26 et le support d'actionneur par des ressorts en spirale. Sur la figure 14, les contacteurs électriques 7 sont désactivés, les entretoises mobiles 26 ne sollicitant pas le clinquant 24. Sur la figure 15, les contacteurs électriques 7 sont activés, la mise en pression des enceintes 11 à volume variable entrainant une déformation de la membrane souple 23, qui repousse les entretoises mobiles 26 en direction du clinquant 24, de sorte que les contacts électriques mobiles 12 soient sollicités en direction des accumulateurs 6.

Dans cet exemple, le support d'actionneur 22, les entretoises mobiles 26 et les lames ressort reliant ces deux pièces sont réalisés en une pièce par fabrication additive.

Dans ce mode de réalisation, le moyen élastique sollicitant l'enceinte 11 à volume variable vers une position de repos est constitué conjointement du clinquant 24, avec ses ressorts en spirale, et des entretoises mobiles 26, avec ses ressorts en spirale. En variante, l'un seulement de ces éléments pourrait assurer la fonction dudit moyen élastique.

Les figures 16 à 19 illustrent un procédé de montage et connexion d'un module accumulateur électrochimique, mettant en oeuvre un boitier 1 selon l'invention, destiné à la production d'une batterie neuve, ou dans le cadre d'une opération de maintenance, ou de reconditionnement, d'une batterie existante. Le procédé de connexion comporte une étape de mise en pression d'un fluide dans le réseau de conduits fluidiques 14.

Ces figures 16 à 19 sont relatives à un boitier 1 selon un mode de réalisation dans lequel les logements 5 sont formés d'un ensemble d'alvéoles cylindriques 28 destinées à contenir des accumulateurs 6 également cylindriques. Le reste du fonctionnement des connecteurs électriques 7 correspond aux autres modes de réalisation décrits précédemment.

La figure 16 illustre la mise en place des accumulateurs 6 dans les alvéoles cylindriques 28 constituant les logements 5.

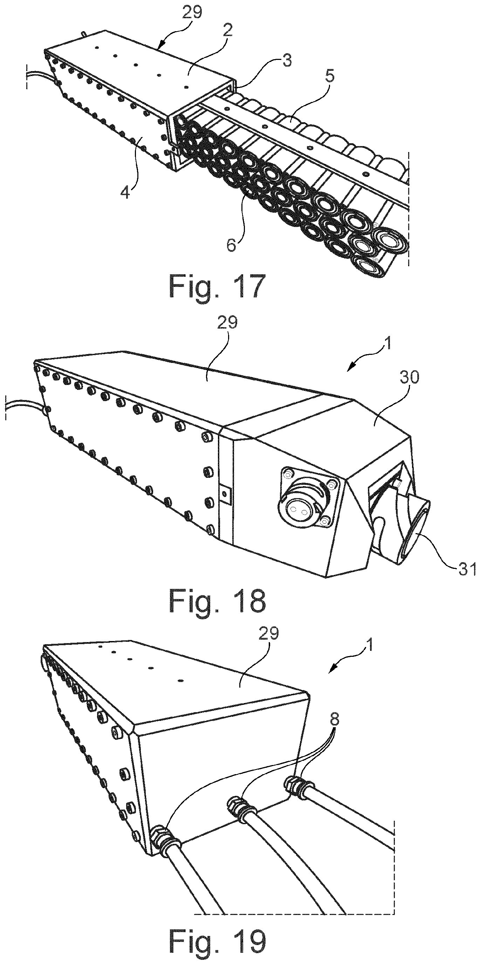

La figure 17 illustre l'étape suivante, dans laquelle l'ensemble des logements 5 est inséré dans un contenant 29 qui comprend les parois latérales 2, la paroi d'appui 3 et la paroi de connexion 4, en vis-à-vis l'une de l'autre, et plus précisément sensiblement parallèlement l'une à l'autre. Les logements 5 maintiennent les accumulateurs 6 fixes par rapport aux parois 3,4.

La figure 18 illustre l'étape suivante, dans laquelle un couvercle de connexion 30 vient refermer le contenant 29. Ce couvercle de connexion 30 est muni de la connectique 31 nécessaire à la liaison électrique avec les accumulateurs 6, selon l'architecture prévue pour le boitier 1, ainsi qu'avec d'éventuels capteurs situés dans le boitier 1.

La figure 19 illustre la face du boitier 1 qui est opposée au couvercle de connexion 30, avec trois raccords fluidiques 8 saillants, constituant ainsi le module accumulateur électrochimique.

Le module accumulateur électrochimique peut ensuite être stocké, transporté, livré, etc. sans avoir été connecté et donc sans présenter de danger. La possibilité de connecter les accumulateurs une fois le boitier fermé permet de limiter le risque d'électrisation/électrocution et de court-circuit pour l'opérateur lors des étapes de montage. Lors de la phase de transport, les accumulateurs peuvent rester déconnectés pour minimiser le risque d'emballement thermique. Ceci est particulièrement adapté aux packs batteries qui présentent un danger d'électrisation, un risque de feu, et un risque chimique en cas d'emballement thermique, par exemple les packs batteries de véhicule électrique dont la tension est régulièrement de l'ordre de 400 volts.

Une fois que le module est mis en service, prêt à être connecté, le réseau de conduits fluidiques 14 est alors mis en pression, par exemple par un gaz comprimé à une pression, dans cet exemple, qui va de 1 à 20 bars.

De préférence, cette mise en pression est réalisée en deux temps : dans un premier temps, une faible pression est appliquée au réseau de conduits fluidiques 14, de sorte que l'enceinte 11 à volume variable se déforme lentement et entraine chaque contact électrique mobile 12 à venir approcher puis au contact de l'électrode sur l'accumulateur 6 correspondant.

Dans un deuxième temps, la pression est fortement augmentée pour appuyer le le contact électrique mobile 12, le sécuriser, et le maintenir dans le temps malgré les chocs et les vibrations propres aux applications en milieu difficile.

Le procédé de déconnexion du module est réalisé par les mêmes opérations, dans l'ordre inverse, avec une étape de diminution de la pression du réseau de conduits fluidiques 14, par exemple une mise à la pression atmosphérique du réseau de conduits fluidiques 14, ce qui provoque une déconnexion des accumulateurs 6.

Par ailleurs, l'enceinte à volume variable 11 est de préférence constituée d'un matériau dont la température de fusion est inférieure à 120°C, et de préférence dans la plage 80-120°C.

Ainsi, chaque contacteur électrique 7 est disposé en vis-à-vis de l'accumulateur 6 correspondant de sorte que si l'accumulateur 6 venait à subir une avarie tels que surchauffe, départ de feu, dégazage par ouverture de l'évent de sécurité, voire explosion, l'enceinte 11 à volume variable serait de ce fait endommagée et une fuite serait créée par perçage de l'enveloppe formant l'enceinte 11 à volume variable. Une telle fuite aurait pour effet de faire chuter la pression dans l'ensemble des conduits fluidiques 14, ou dans le tronçon concerné du réseau de conduits fluidiques 14, ce qui déconnecterait en conséquence aussi bien l'accumulateur 6 défectueux que les accumulateurs voisins du même tronçon. Cette déconnexion se fait en réaction directe à l'incident, et ne nécessite aucun capteur, aucun traitement d'information, ni aucun apport d'énergie. Cette déconnexion procure une fonction de sécurité passive au boitier 1, avec un niveau élevé de fiabilité pour répondre à une problématique critique touchant notamment les batteries de chimie lithium.

De plus, la fuite provoque une coulée du fluide des conduits fluidiques 14 vers l'accumulateur à l'origine de l'incident, de sorte qu'une action directe et localisée sur l'accumulateur permet de minimiser, voire d'arrêter l'incident au plus tôt. Pour cette fonction de sécurité passive doublée d'une action corrective localisée, le moyen de mise en pression 16 alimente de préférence le réseau de conduits fluidiques 14 avec un gaz inerte, adapté donc à minimiser les dégâts causés par l'incident, ou avec un fluide ayant des propriétés d'extinction ou de refroidissement (par exemple, des composés gazeux à base d'argon et de diazote).

Des variantes de réalisation peuvent être envisagées. Notamment, les parois d'appui 3 et de connexion 4 peuvent ne comporter que des éléments structurels minimaux (poutres, structure tubulaire, parois ajourées) pour supporter l'appui des accumulateurs 6, les contacteurs électriques 7, et le passage des conduits fluidiques 14. De même, le réseau de conduits fluidiques 14 peut cheminer différemment que dans l'épaisseur de matière de la paroi de connexion 4, par exemple, à la surface de cette paroi de connexion 4, ou encore, par des conduits extérieurs rapportés sur la paroi.

Par ailleurs, les raccords fluidiques 8 peuvent ne pas être saillants directement de la paroi de connexion 4, mais peuvent cheminer par d'autres parois du boitier 1, grâce à des jonctions étanches.

Le fluide mis en pression dans le réseau de conduits fluidiques 14 peut être un gaz (exemple : air, CO2), un gaz inerte (exemple : argon), un liquide (exemple : eau, huile, fluide diélectrique), ou tout autre substance adaptées à la fonction décrite, par exemple une mousse diélectrique.

Par ailleurs, les accumulateurs 6 peuvent comporter des électrodes situées uniquement du côté de la paroi de connexion 4, la paroi d'appui 3 ne réalisant que l'appui mécanique des accumulateurs 6, sans contact électrique.

Par ailleurs, le réseau de conduits fluidiques 14 peut être déconnecté du moyen de mise en pression 16 une fois la mise en pression de la chambre 11 à volume variable réalisée, un système de fermeture/obstruction assurant le maintien en pression des conduits fluidiques.

## Revendications

1. Module accumulateur électrochimique comportant un boitier (1) et au moins un accumulateur électrochimique (6) disposé dans un logement (5) du boitier (1), **caractérisé en ce qu'**il comprend :
- une paroi d'appui (3) et une paroi de connexion (4) en vis-à-vis l'une de l'autre, ledit logement (5) s'étendant entre ces deux parois (3,4) ;
- au moins un contacteur électrique (7), monté sur la paroi de connexion (4) et comportant une enceinte (11) à volume variable ainsi qu'un contact électrique mobile (12) adapté à être déplacé par l'enceinte (11) à volume variable en direction d'une borne de l'accumulateur électrochimique (6), le contact électrique mobile (12) étant électriquement relié à un circuit électrique par un conducteur de jonction (13) ;
- un réseau de conduits fluidiques (14) disposé au niveau de la paroi de connexion (4) et raccordant l'enceinte (11) à volume variable avec un raccord fluidique (8) monté sur le boitier (1) et saillant du boitier (1), le raccord fluidique (8) étant adapté à être raccordé à un circuit fluidique à l'extérieur du module accumulateur électrochimique.

2. Module accumulateur électrochimique selon la revendication 1, **caractérisé en ce que** l'enceinte (11) à volume variable est formée par une enveloppe élastiquement déformable.

3. Module accumulateur électrochimique selon la revendication 2, **caractérisé en ce que** l'enveloppe élastiquement déformable est formée par un prolongement de matière de la paroi de connexion (4).

4. Module accumulateur électrochimique selon l'une des revendications 2 ou 3, **caractérisé en ce que** l'enveloppe élastiquement déformable présente une forme cylindrique avec au moins une zone de section réduite.

5. Module accumulateur électrochimique selon l'une des revendications précédentes, **caractérisé en ce que** le contact électrique mobile (12) est formé par un revêtement de surface conducteur appliqué sur l'enceinte (11) à volume variable.

6. Module accumulateur électrochimique selon la revendication 1, **caractérisé en ce que** le contacteur électrique (7) comporte un vérin (17), l'enceinte (11) à volume variable étant formée par une chambre du vérin.

7. Module accumulateur électrochimique selon la revendication 6, **caractérisé en ce que** le vérin (17) comporte un piston (18), l'enceinte (11) à volume variable étant délimitée par ce piston (18) et par ladite chambre du vérin (17), le contact électrique mobile (12) étant couplé à ce piston (18).

8. Module accumulateur électrochimique selon la revendication 1, **caractérisé en ce que** l'enceinte (11) à volume variable comporte une membrane souple (23) disposée dans la paroi de connexion (4).

9. Module accumulateur électrochimique selon la revendication 8, **caractérisé en ce que** la membrane souple (23) est serrée entre un support d'actionneurs (22) et un corps (20) qui comporte une chambre interne (25) raccordée au réseau de conduits fluidiques (14).

10. Module accumulateur électrochimique selon la revendication 9, **caractérisé en ce que** le support d'actionneurs (22) comporte au moins une entretoise mobile (26) disposée contre la membrane souple (23), le contact électrique mobile (12) étant couplé à l'entretoise mobile (26).

11. Module accumulateur électrochimique selon l'une des revendications précédentes, **caractérisé en ce que** le contacteur électrique (7) comporte un moyen élastique sollicitant l'enceinte (11) à volume variable vers une position de repos dans laquelle le contact électrique mobile (12) est maintenu à l'écart de la paroi d'appui (3) d'une distance supérieure à une distance prédéterminée.

12. Module accumulateur électrochimique selon l'une des revendications précédentes, **caractérisé en ce que** le réseau de conduits fluidiques (14) est pratiqué dans l'épaisseur de la paroi d'appui (3).

13. Module accumulateur électrochimique selon l'une des revendications précédentes, **caractérisé en ce que** l'enceinte (11) à volume variable est constituée d'un matériau dont la température de fusion est inférieure à 120°C.

14. Module accumulateur électrochimique selon l'une des revendications précédentes, **caractérisé en ce que** la paroi de connexion (4), le réseau de conduits fluidiques (14), et l'enceinte (11) à volume variable sont faits d'une seule pièce.

15. Module accumulateur électrochimique selon l'une des revendications précédentes, **caractérisé en ce qu'**il comporte une pluralité desdits contacteurs électriques (7) dont les enceintes (11) à volume variable sont fluidiquement reliées entre elles par le réseau de conduits fluidiques (14).

16. Module accumulateur électrochimique selon la revendication 15 **caractérisé en ce que** le réseau de conduits fluidiques (14) comporte une pluralité de tronçons indépendants, chacun de ces tronçons comportant : un raccord fluidique (8) monté sur le boitier (1) et saillant du boitier (1), le raccord fluidique (8) étant adapté à être raccordé à un circuit fluidique à l'extérieur du module accumulateur électrochimique ; au moins un conduit fluidique (14) ; et une pluralité d'enceintes (11) à volume variable des contacteurs électriques (7) ; fluidiquement reliés entre eux.

17. Module accumulateur électrochimique selon l'une des revendications précédentes, **caractérisé en ce qu'**il comporte une pluralité desdits contacteurs électriques (7), le conducteur de jonction (13) raccordant électriquement plusieurs contacts électriques mobiles (12).

18. Module accumulateur électrochimique selon la revendication 17, **caractérisé en ce que** le conducteur de jonction (13) est formé par une plaque métallique souple.

19. Module accumulateur électrochimique selon l'une des revendications précédentes, **caractérisé en ce qu'**il comporte un moyen de mise en pression (16) d'un fluide, disposé à l'extérieur du boitier (1) et branché sur le raccord fluidique (8).

20. Module accumulateur électrochimique selon l'une des revendications précédentes, **caractérisé en ce qu'**il comporte en outre :
- au moins un contacteur électrique (7), monté sur la paroi d'appui (3) et comportant une enceinte (11) à volume variable ainsi qu'un contact électrique mobile (12) adapté à être déplacé par l'enceinte (11) à volume variable en direction d'une borne de l'accumulateur électrochimique (6), le contact électrique mobile (12) étant électriquement relié à un circuit électrique par un conducteur de jonction (10) ;
- un réseau de conduits fluidiques (14) disposé au niveau de la paroi d'appui (3) et raccordant ladite enceinte (11) à volume variable avec un raccord fluidique (8) monté sur le boitier (1) et saillant du boitier (1), le raccord fluidique (8) étant adapté à être raccordé à un circuit fluidique à l'extérieur du module accumulateur électrochimique.

21. Procédé de connexion d'un module accumulateur électrochimique selon l'une des revendications 1 à 20, **caractérisé en ce qu'**il comporte une étape de mise en pression d'un fluide dans le réseau de conduits fluidiques (14).

22. Procédé de déconnexion d'un module accumulateur électrochimique selon la revendication 21, **caractérisé en ce qu'**il comporte une étape de diminution de la pression du réseau de conduits fluidiques (14).
